Europäisches Patentamt

European Patent Office

Office européen des brevets

(19)

(11) Publication number: **0 141 605**
**B1**

(12) **EUROPEAN PATENT SPECIFICATION**

(45) Date of publication of patent specification: **27.04.88**

(51) Int. Cl.⁴: **F 16 H 37/02**

(21) Application number: **84307247.1**

(22) Date of filing: **22.10.84**

(54) **Continuously variable power transmission.**

(30) Priority: **03.11.83 US 548325**

(43) Date of publication of application:
**15.05.85 Bulletin 85/20**

(45) Publication of the grant of the patent:
**27.04.88 Bulletin 88/17**

(84) Designated Contracting States:
**DE FR GB IT**

(56) References cited:
**EP-A-0 004 412**
**CH-A- 243 182**
**DE-A-2 621 682**
**DE-A-2 948 194**
**FR-A-2 520 826**
**GB-A-2 025 545**

(73) Proprietor: **GENERAL MOTORS CORPORATION**
**General Motors Building 3044 West Grand**
**Boulevard**
**Detroit Michigan 48202 (US)**

(72) Inventor: **Koivunen, Erkki Antero**
**15560 Westbrooke**
**Livonia Michigan, 48154 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

Courier Press, Leamington Spa, England.

## Description

This invention relates to a continuously variable power transmission as specified in the preamble of claim 1, for example as disclosed in FR—A— 2 520 826.

The present invention is concerned with the provision of an extended range continuously variable power transmission with no power loss when shifting between ranges.

To this end a continuously variable power transmission in accordance with the present invention is characterised by the measures specified in the characterising portion of claim 1.

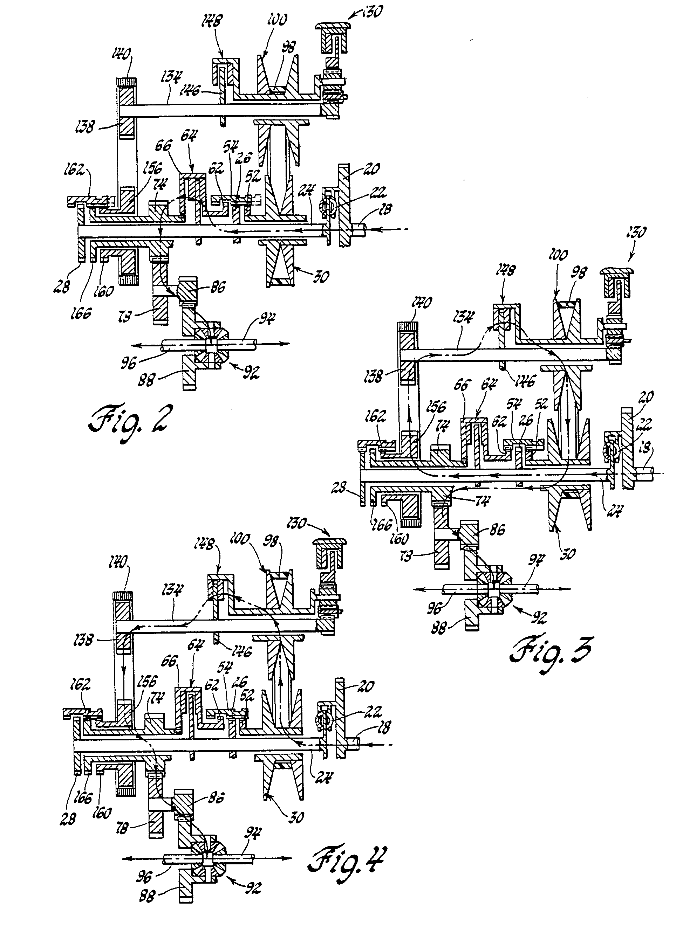

The invention thereby makes available an improved continuously variable power transmission having two ratio ranges wherein the transmission includes a variable belt drive having two adjustable pulley members connectible between the transmission input and output shafts in series with a mechanical ratio and wherein the transmission also includes a pair of clutches effective to place the mechanical ratio after the belt drive in one range and before the belt drive in the other range. Through manipulation of the clutches, the mechanical ratio can be disposed in the power flow to provide an underdrive ratio in one speed range and an overdrive ratio in another speed range. This permits the use of a single set of gears in both an overdrive and an underdrive condition. The variable ratio belt drive is connectible between the input and output members of a transmission in such a manner as to provide power flow in one direction during a low range and in the opposite direction during a high range, and a transition clutch maintains the power flow during an interchange between the ranges. The change in the direction of power flow occurs during the transition from the upper end of the low range to the lower end of the high range. As will be described herein, this power flow change occurs when the transmission is operating at the point defined by Figure 2 of the present drawings.

In CH—A—243 182 there is disclosed a steplessly regulatable gear arrangement utilising a variator (that is, a variable-ratio belt drive including a pair of adjustable pulleys) and associated gearing having a number of sliding-mesh gears. For a change-over, the gearing is temporarily placed in parallel with the variator. If the transmission ratio of the gearing is chosen to be the same as that of the variator when the change-over occurs, a shock-free change-over is obtained, so permitting the change-over to take place under load. On change-over, there is a reversal of the direction of torque transmission in the variator.

In the drawings:

Figure 1 is a fragmentary longitudinal section, with parts in elevation, of one embodiment of a continuously variable power transmission in accordance with the present invention;

Figure 2 is a diagrammatic representation of the transmission, showing a condition at which a power flow change occurs between a low range mode and a high range mode of operation;

Figure 3 is a diagrammatic representation of the transmission, showing the high range mode of operation; and

Figure 4 is a diagrammatic representation of the transmission, showing the low range mode of operation.

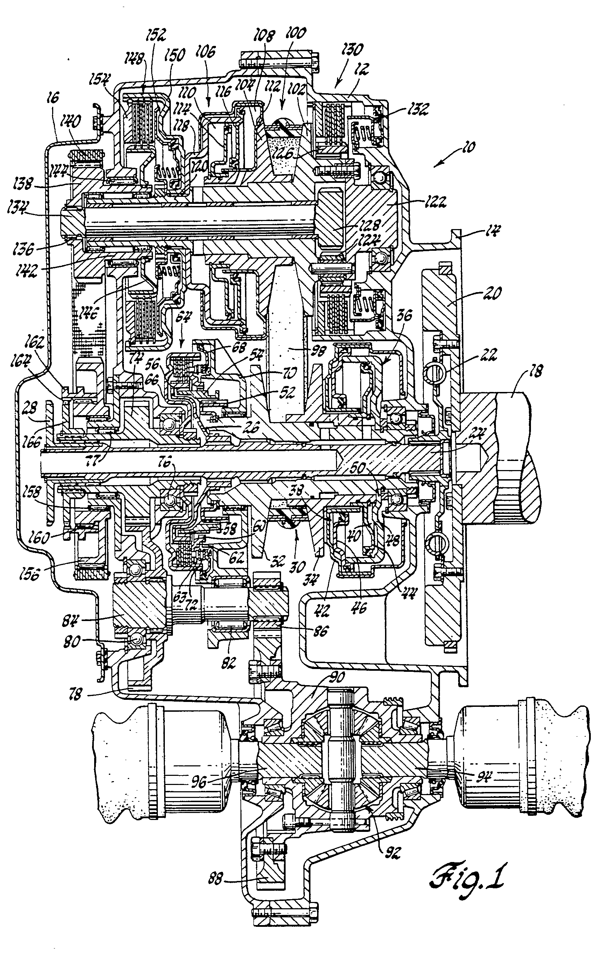

With reference now to Figure 1, a continuously variable power transmission 10 for a motor vehicle is shown which includes a multi-piece housing 12 that is adapted to be secured to an engine, not shown, by a flange 14. The housing 12 is closed at the left side by a pan-like cover 16. The transmission 10 receives input power from an engine shaft 18 which is drivingly connected by way of a flywheel 20 and vibration damper 22 to a transmission input shaft 24.

The transmission input shaft 24 extends the length of the transmission and has a centrally disposed clutch hub portion 26 and a mechanical clutch portion 28 which is formed as an externally splined member and connected to the input shaft 24. Rotatably disposed on the input shaft 24 is an adjustable pulley 30 which includes a fixed sheave (pulley half) 32 and a movable sheave (pulley half) 34. The movable sheave 34 is controlled by a hydraulic actuator 36, which is preferably of the double piston variety. The actuator 36 has two hydraulic cylinder chambers 38 and 40 which may be filled with pressurized fluid acting on a pair of piston members 42 and 44 that are operable to position the movable sheave 34.

The cylinders 38 and 40 are closed by walls 46 and 48, respectively, which are grounded or otherwise secured at 50 to the fixed sheave 32. The operation of hydraulic control actuators such as are shown herein is well known. The fixed sheave 32 has drivingly connected thereto a clutch hub 52 on which is slidably supported a clutch sleeve 54. The clutch sleeve 54 is drivingly connected to the clutch hub 52. The output periphery of the clutch sleeve 54 has formed thereon a spline constituting a drive portion 56 which is selectively connectible to a spline 58 formed on the hub 26 or to a spline 60 formed on a plate 62.

A transition clutch, generally designated 64, includes a clutch housing 66 in which is disposed a plurality of friction plates. The friction plates are splined alternately to the clutch hub 26 and the clutch housing 66. When it is desired to engage the transition clutch 64, the friction plates are brought into abutment by pins 63 which are acted on by a non-rotating piston 68 that is slidably disposed in a housing portion 70 and separated from the rotating pins 63 by a needle roller bearing 72. When the transition clutch 64 is engaged, the input shaft 24 is drivingly connected directly to the clutch housing 66.

The transfer plate 62 is also splined to the clutch housing 66 such that when the clutch sleeve 54 is moved rightwardly the spline 56 will engage the spline 60, thereby providing a drive connection between the pulley 30 and the clutch housing 66.

The clutch housing 66 is secured to a gear member 74 which is rotatably supported in the housing 12 by means of a ball bearing 76 and needle bearing 77, and meshes with a gear 78 that is also rotatably mounted in the housing 12 by means of a ball bearing 80 and a needle roller bearing 82. The gear 78 is secured to a shaft member 84 on which is drivingly secured a gear 86 that meshes with a differential input gear 88.

The gears 74 and 78 provide a fixed gear ratio between the clutch housing 66 and the shaft member 84. The gears 86 and 88 also provide a fixed drive ratio which is normally termed the final drive ratio. The gear 88 is secured to a conventional differential housing 90 in which is disposed a conventional bevel-type differential gear unit 92 having a pair of output shafts 94 and 96 adapted to drive the vehicle wheels.

In the configuration shown, the transmission 10 can be considered to be a transaxle, and is readily adaptable for use in vehicular transverse front wheel drive packages. However, the invention is not limited to this specific application.

The pulley 30 frictionally engages a belt member 98 which also frictionally engages an adjustable pulley 100. The pulley 100 includes a fixed sheave (pulley) 102 and a movable sheave (pulley) 104. The movable sheave 104 is controlled by a hydraulic actuator 106 having a pair of control cylinder chambers 108 and 110 which are filled with pressurized fluid to operate on pistons 112 and 114, respectively. The cylinders 108 and 110 are closed by end walls 116 and 118 which are secured to a shaft 120 that is an extension of the fixed sheave 102.

The hydraulic actuator 106 operates in concert with the hydraulic actuator 36 to provide the desired drive ratio between the variable pulleys 30 and 100. The use of such hydraulic controls is well known. For example, the total working area of the actuator 106 can be designed to be greater than the total working area of the actuator 36, such that a fixed pressure can be maintained in the actuator 36 and a variable pressure can be utilized in the actuator 106 to control the drive ratio.

If the pressure in the actuator 106 is decreased, the actuator 36 will be operable to move the sheaves 32 and 34 closer together, thereby forcing the belt 98 to move radially outwardly while simultaneously causing the belt 98 to move radially inwardly at the pulley 100.

The radially inward movement of the belt 98 will cause separation of the sheaves 102 and 104. When the desired drive ratio between the pulleys is achieved, the pressure in the actuator 106 can be controlled to provide the proper balance to maintain the ratio thus established.

The fixed sheave 102 is secured to a planetary gear carrier 122 which has rotatably supported thereon a plurality of intermeshing planetary pinions. A plurality of the pinions 124 mesh with a ring gear 126, and a second group of pinions, not shown, mesh with a sun gear 128. This provides a conventional compound planetary gear set.

The ring gear 126 is selectively connectible to the transmission housing 12 by means of a fluid-operated friction brake 130 which includes a selectively fluid-actuated piston 132 and a plurality of interleaved friction discs. Such fluid brakes are well-known, and a detailed description is not considered necessary. When the brake 130 is engaged or actuated, the sun gear 128 will be driven in a direction opposite to the direction of rotation of the pulley 100 such that reverse drive is provided between the pulley 100 and the sun gear 128.

The sun gear 128 has secured thereto or otherwise integrally formed therewith a shaft 134 which has a spline at 136. The spline 136 provides a drive connection for a sprocket member 138 which meshes with a conventional chain member 140. The sprocket member 138 has a shaft portion 142 which is rotatably supported in the housing 12 by a needle bearing 144 and is drivingly connected to a clutch hub 146. The clutch hub 146 is a component of a fluid-actuated friction clutch 148, which has a housing 150, a fluid-operated piston 152, a back-up plate 154 and a plurality of interleaved friction discs that are selectively connectible between the housing 150 and the hub 146.

The housing 150 is drivingly connected to the shaft extension 120 of the pulley 100 such that the housing 150 rotates in unison with the pulley 100. When the friction clutch 148 is engaged, the sprocket member 138 will rotate in the same direction as the pulley 100: this direction is considered to be the forward direction. Thus the clutch 148 is considered to be a forward clutch, and the brake 130 is considered to be a reverse brake.

The chain member 140 also meshes with a sprocket member 156 which is rotatably supported on a portion of the housing 12 by means of a needle bearing 158. The sprocket member 156 has a spline or gear portion 160 on which is slidably disposed a clutch sleeve 162. The clutch sleeve 162 is drivingly connected to the spline or gear portion 160, and further includes a spline or gear portion 164 which is selectively connectible to a gear 166 or to the clutch portion 28.

The gear 166 is drivingly connected to the gear member 74. Thus in the position shown the chain drive, comprising the sprocket members 138 and 156 and the chain member 140, is drivingly connected to the gear member 74. If the clutch sleeve 162 is moved leftwardly, the sprocket 156 and therefore the chain drive are connected to the clutch portion 28 and therefore to the transmission input shaft 25.

The operation of the transmission will now be described with reference to Figures 2 to 4. The pertinent mechanical components in Figures 2 to 4 will be given the same numerical designation as designates the corresponding parts in Figure 1. The relative positions of these components in Figures 2 to 4 may be slightly different from what is shown in Figure 1; however, the operation is the same.

In Figure 4, the transmission is shown conditioned for a low range of operation. The mechanical clutch comprising the clutch sleeve 54 is effective to connect the pulley 30 to the input shaft 24, and the mechanical clutch comprising the clutch sleeve 162 is effective to connect the chain drive to the gear 74 and therefore to the transmission output shafts 94 and 96. The pulleys 30 and 100 are conditioned at the maximum underdrive ratio such that maximum torque transmission will be achieved. To start the vehicle moving, the clutch 148 is engaged. In the alternative, a centrifugal-type input clutch could be utilized.

Operation in the low range can be accomplished at a fixed engine speed, with the vehicle output speed being controlled by adjusting the drive ratio between the pulleys 30 and 100 from the maximum underdrive condition shown in Figure 4 towards the maximum overdrive condition shown in Figure 2. When the maximum overdrive condition is reached, further increase in vehicle speed during low range operation can be achieved only by increasing the engine speed.

When the maximum overdrive ratio shown in Figure 2 is achieved, the drive ratio from the pulley 30 to the pulley 100 is the inverse of the drive ratio provided by the chain member 140 between the sprocket members 138 and 156. Therefore, the gear 74 is rotating at the same speed as the input shaft 24. When this condition is present, the transition clutch 64 can be engaged. With the transition clutch 64 engaged, the power flow from the input shaft 24 to the output shafts 94 and 96 will be in the sense signified by the arrows in Figure 2.

During the engaged condition of the transition clutch, the clutch sleeve 54 can be moved from the solid-line position shown in Figure 2 to the phantom-line position, and the clutch sleeve 162 can be moved from the solid-line position shown in Figure 2 to the phantom-line position. These phantom-line positions correspond to the positions shown in Figure 3 for the clutch sleeves 54 and 162 respectively.

Due to the synchronization when the transition clutch is engaged, the clutch sleeves 54 and 162 can be shifted without gear clash. As is shown in Figure 3, the clutch sleeve 162 is then effective to connect the input shaft 24 to the chain drive, and correspondingly the clutch sleeve 54 is effective to connect the pulley 30 by way of the clutch housing 66 to the gear 74 and therefore to the transmission output shafts 94 and 96.

When the high ratio range is first established, the condition of the pulleys 30 and 100 will be as shown in Figure 2. For power flow from the pulley 30 to the pulley 100 this condition corresponds to a maximum overdrive ratio, but for power flow from the pulley 100 to the pulley 30 this condition would correspond to a maximum underdrive ratio between the pulleys. For either of these directions of power flow, the drive ratio through the chain drive will be the converse of the drive ratio between the pulleys. The actual direction of the power flow depends on the position of the clutch sleeves 54 and 162, but for either direction of power flow there is a 1:1 overall ratio in the pulley drive and chain drive.

If desired, the clutch 148 can be disengaged during transition clutch operation: for subsequent high-ratio range operation, the clutch 148 is reengaged and the transition clutch 64 is disengaged. The power flow path is then as illustrated in Figure 3.

To provide an increase in vehicle speed during the high ratio range, the pulleys 30 and 100 are then adjusted towards the maximum overdrive ratio from the pulley 100 to the pulley 30, to give the condition shown in Figure 3.

Vehicle speed decreases are accomplished by reducing the drive ratio of the pulley system towards the position shown in Figure 2. Downshifting from the high ratio range to the low ratio range is accomplished in a manner which is the converse of the upshifting described above.

To summarise the operation in the forward drive ratios, therefore, for driving in the low ratio range the clutch conditions and the power flow are as illustrated in Figure 4, with speed increases being obtained by adjustment of the pulley drive in the direction of the maximum overdrive position shown in Figure 2. In the Figure 2 condition there is a 1:1 overall ratio in the pulley drive and chain drive. For a shift to the high ratio range, the transition clutch 64 is first engaged to maintain the power flow, to give a power flow path as illustrated by the arrows in Figure 2, following which the clutch sleeves 54 and 162 are moved to their Figure 3 positions, without gear clash because of the prevailing 1:1 ratio. Release of the transition clutch 64 (and re-engagement of the clutch 148 if this was disengaged during transition clutch operation) gives a power flow path as illustrated by the arrows in Figure 3, and thereby establishes the high ratio range. Initially, in the high ratio range, the pulley drive is still in its Figure 2 condition: speed increases in the high ratio range are obtained by adjustment of the pulley drive from the maximum underdrive position shown in Figure 2 (for the direction of power flow prevailing in the high ratio range) in the direction of the maximum overdrive position which is shown in Figure 3.

It is also possible to obtain a reverse drive ratio by starting the transmission as shown in Figure 4 but with actuation of the reverse brake 130 and release of the forward clutch 148. Speed increases are accomplished by appropriate manipulation of the pulley system ratio. High ratio range operation is in principle possible in reverse; however, in most vehicle applications a high reverse ratio will probably not be desirable.

**Claims**

1. A continuously variable power transmission in which variable-ratio pulley and belt means (30, 98, 100) including a flexible drive member (98) interconnecting a first adjustable pulley (30) and a second adjustable pulley (100) is operatively connectible between input means (24) and output means (94, 96), the variable-ratio pulley and belt means (30, 98, 100) provides a change in ratio in the pulley drive from an underdrive to an overdrive during a low variable speed ratio range and from an underdrive to an overdrive during a high variable speed ratio range by means of a first and a second selectively engageable clutch means (54) and 162), and provision is made for maintaining power flow during the change-over between the respective ratio ranges, characterized in that a single set of fixed-ratio gears is disposed in the power flow during both ratio ranges, in that the first clutch means (54) connects the first pulley (30) to the input means (24) and the second clutch means (162) connects the second pulley (100) to the output means (94, 96) during the low ratio range, a transition clutch (64) is selectively engageable to connect the input means (24) to the output means (94, 96) during said change-over, and whilst the transition clutch (64) is in engaged condition the first clutch means (54) is shiftable for connecting the first pulley (30) to the output means (94, 96) and the second clutch means (162) is shiftable for connecting the second pulley (100) to the input means (24) for establishing the high ratio range.

2. A continuously variable power transmission according to claim 1, characterised in that fixed-ratio chain drive means (138, 140, 156) is connectible to the second pulley (100), and that the second clutch means (162) connects the chain drive means to the output means (94, 96) during the low ratio range and to the input means (24) during the high ratio range.

3. A continuously variable power transmission according to claim 1 or 2, characterised in that a forward-reverse drive selection means (148, 130) is operatively connectible to the second pulley (100).

**Patentansprüche**

1. Stufenlos verstellbares Leistungsgetriebe, in welchem Riemenscheiben- und Riemen-Mittel (30, 98, 100) mit variablem Übersetzungsverhältnis, einschließlich ein flexibles Antriebsglied, das eine erste einstellbare Riemenscheibe (30) und eine zweite einstellbare Riemenscheibe verbindet (100), wirksam verbindbar ist zwischen Eingangsmitteln (24) und Abgabemitteln (94, 96), wobei das Riemenscheiben- und Riemen-Mittel (30, 98, 100) mit variablem Übersetzungsverhältnis eine Verhältnismaßänderung im Riemenscheibenantrieb von einer Untersetzung zu einer Übersetzung während eines niedrigen variablen Geschwindigkeitsverhältnisbereiches, und von einer Untersetzung zu einer Übersetzung während eines hohen variablen Geschwindigkeitsverhältnisbereiches schafft mittels eines ersten und eines zweiten wahlweise in Eingiff bringbaren Kupplungsmittels (54 und 162), und Vorkehrung getroffen ist zum Aufrechterhalten des Leistungsflusses während des Überwechselns zwischen den jeweiligen Verhältnisbereichen, dadurch gekennzeichnet, daß eine ein-

zelne Reihe von Zahnrädern mit festliegendem Übersetzungsverhältnis in dem Leistungsfluß während beider Verhältnisbereiche angeordnet ist, daß das erste Kupplungsmittel (54) die erste Riemenscheibe (30) mit dem Eingangsmittel (24) und das zweite Kupplungsmittel (162) die zweite Riemenscheibe (100) mit dem Abgabemittel (94, 96) während des niedrigen Verhältnisbereiches verbindet, daß eine Übergangskupplung (64) wahlweise in Eingriff bringbar ist, um das Eingangsmittel (24) mit dem Abgabemittel (94, 96) während des Bereichwechsels zu verbinden, u8nd daß, während die Übergangskupplung (64) im Eingriffszustand ist, das erste Kupplungsmittel (54) verschiebbar ist zum Verbinden der ersten Riemenscheibe (30) mit dem Abgabemittel (94, 96) und daß das zweite Kupplungsmittel (162) zur Verbindung der zweiten Riemenscheibe (100) mit dem Eingangsmittel (24) verschiebbar ist, zur Errichtung des hohen Verhältnisbereiches.

2. Stufenlos verstellbares Leistungsgetriebe nach Anspruch 1, dadurch gekennzeichnet, daß Kettenantriebsmittel (138, 140, 156) mit festem Übersetzungsverhältnis mit der zweiten Riemenscheibe (100) verbindbar ist und daß das zweite Kupplungsmittel (162) das Kettenantriebsmittel mit dem Abgabemittel (94, 96) während des niedrigen Verhältnisbereiches und mit dem Eingangsmittel (24) während des hohen Verhältnisbereiches verbindet.

3. Stufenlos verstellbares Leistungsgetriebe nach Anspruch 1 oder 2, dadurch gekennzeichnet, daß ein Vorwärts/ Rückwärts-Antriebsauswahlmittel (148, 130) wirksam mit der zweiten Riemenscheibe (100) verbindbar ist.

**Revendications**

1. Variateur continu de vitesse, dans lequel un mécanisme à poulies et courroie trapézoïdale à rapport variable (30, 98, 100), comportant un élément souple de transmission (98) reliant mutuellement une première poulie réglable (30) et une seconde poulie réglable (100), peut être interposé entre des moyens d'entrée (24) et des moyens de sortie (94, 96) de façon à coopérer avec eux en fonctionnement, ce mécanisme à poulies et courroie trapézoïdale à rapport variable (30, 98, 100) fournissant une variation de rapport de transmission pour le transmission à poulies, en passant d'une sous-multiplication à une surmultiplication lorsque l'on est dans une gamme basse de rapports variables de transmission, et d'une sous-multiplication à une surmultiplication lorsqu'on se trouve dans une gamme élevée de rapports variables de transmission, à l'aide d'un premier et d'un second mécanismes d'embrayage à engagement sélectif (54 et 162), tandis que des moyens sont prévus pour maintenir la transmission de puissance pendant la transition entre les gammes respectives de rapports, caractérisé en ce qu'un train unique d'engrenages à rapport fixe est disposé dans la transmission de puise lorsqu'on se trouve dans l'une et l'autre des gammes de rapports, en ce que le premier méca-

**0 141 605**

nisme d'embrayage (54) rend la première poulie (30) solidaire des moyens d'entrée (24) et le second mécanisme d'embrayage (162) rend la seconde poulie (100) solidaire des moyens de sortie (94, 96) lorsqu'on se trouve dans la gamme basse de rapports, un embrayage de transition (64) peut être engagé de manière sélective de façon à rendre les moyens d'entrée (24) solidaires des moyens de sortie (94, 96) pendant ledit passage et, tandis que cet embrayage de transition (64) se trouve à l'état engagé, le premier mécanisme d'embrayage (54) peut être déplacé en translation pour rendre la première poulie (30) solidaire des moyens de sortie (94, 96) et le second mécanisme d'embrayage (162) peut être déplacé en translation pour rendre la seconde poulie (100) solidaire des moyens d'entrée (24), afin d'établir la gamme élevée de rapports.

2. Variateur continu de vitesse selon la revendication 1, caractérisé en ce que le mécanisme de transmission à chaîne à rapport fixe (138, 140, 156) peut être rendu solidaire de la seconde poulie (100) et en ce que le second mécanisme d'embrayage (162) rend ce mécanisme de transmission à chaîne solidaire des moyens de sortie (94, 96) lorsqu'on se trouve dans la gamme basse de rapports, et des moyens d'entrée (24) lorsqu'on se trouve dans la gamme élevée de rapports.

3. Variateur continu de vitesse selon la revendication 1 ou 2, caractérisé en ce que des moyens de sélection marche avant-marche arrière (148, 130) sont rendus solidaires de la seconde poulie (100) de façon à coopérer avec elle en fonctionnement.

Fig.1

Fig. 2

Fig. 3

Fig. 4